Europäisches Patentamt

European Patent Office

Office européen des brevets

(19)

(11) EP 0 919 396 B1

(12) **EUROPÄISCHE PATENTSCHRIFT**

(45) Veröffentlichungstag und Bekanntmachung des Hinweises auf die Patenterteilung:
**10.04.2002   Patentblatt 2002/15**

(51) Int Cl.[7]: **B41M 5/155**, C08K 9/08

(21) Anmeldenummer: **98120591.7**

(22) Anmeldetag: **30.10.1998**

(54) **Farbentwicklerpigment für Selbstdurchschreibepapiere, Herstellungsverfahren dafür, das Pigment enthaltendes Durchschreibepapier und Streichfarbe**

Colour developing pigment for carbonless copy papers, manufacturing process of it and carbonless copy paper and coating composition containing said pigment

Pigment pour développeur de couleur pour papiers d'enregistrement sans carbone, son procédé de fabrication, le papier d'enregistrement sans carbone et la composition de revetement contenant le pigment

(84) Benannte Vertragsstaaten:
**BE DE ES FR GB IT**

(30) Priorität: **01.12.1997   DE 19753271**

(43) Veröffentlichungstag der Anmeldung:
**02.06.1999   Patentblatt 1999/22**

(73) Patentinhaber: **SÜD-CHEMIE AG**
**80333 München (DE)**

(72) Erfinder: **Ruf, Friedrich Dr.**
**84184 Ast (DE)**

(74) Vertreter: **Reitzner, Bruno, Dr. et al**
**Splanemann Reitzner**
**Baronetzky Westendorp**
**Patentanwälte**
**Rumfordstrasse 7**
**80469 München (DE)**

(56) Entgegenhaltungen:
**DE-C- 4 316 069**          **US-A- 4 125 675**

- **DATABASE WPI Section Ch, Week 198408 Derwent Publications Ltd., London, GB; Class A89, AN 1984-046179 XP002142367 & JP 59 007085 A (JIKINO T), 14. Januar 1984 (1984-01-14)**

**Beschreibung**

Die Erfindung betrifft ein Farbentwicklerpigment für Selbstdurchschreibepapiere oder Reaktionsdurchschreibepapiere.

Selbstdurchschreibepapiere oder Reaktionsdurchschreibepapiere sind seit den frühen 50er Jahren bekannt. Sie kommen heute in großen Mengen in Bank- und Frachtformularen, Lieferscheinen, Rechnungen usw. zum Einsatz. Gewöhnlich bestehen sie aus zwei oder mehreren aufeinanderliegenden Papierblättern, wobei das jeweils obere auf der Rückseite eine Farbgeberschicht (CB = coated back), das jeweils untere auf der Vorderseite eine Farbnehmerschicht (CF = coated front) aufweist. Hauptbestandteil der Farbgeberschicht sind dichtwandige Mikrokapseln aus Gelatine, Polyurethan, Melamin-Formaldehyd und ähnlichen Substanzen, die Lösungen von Farbstoffen in der sogenannten Leukoform enthalten. Diese nur schwach gefärbten Farbstoffvorläufer, überwiegend aus der Klasse der Di- oder Triphenylmethane, der Thiazine, der Spiropyrane oder der Fluorane, wirken als Elektronendonatoren (Lewis-Basen) und können mit Elektronenakzeptoren (Lewis-Säuren) in einer chemischen Reaktion in die Farbstofform überführt werden. Derartige Lewis-Säuren befinden sich in der Farbnehmerschicht in Form von sauren Phenolharzen, Zinksalicylaten oder sauer aktivierten Tonmineralien, insbesondere in Form von säureaktivierten smektitischen Schichtsilicate. Werden nun beim Beschreiben eines Selbstdurchschreibesatzes durch den Schreiberdruck die Wände der betroffenen Mikrokapseln zerstört, so wird der Kapselinhalt - die Farbstofflösung - freigesetzt und auf der lewissauren Nehmerschicht entwickelt, wobei eine Kopie entsteht.

Die einzelnen Farbentwicklersysteme weisen unterschiedliche Reaktionsmechanismen auf. So werden die organischen Produkte (Phenolharz, Zinksalicylat) vom Kapsellösemittel angelöst, und die Farbreaktion tritt in homogener, organischer Phase ein. Die so entwickelten Kopien zeigen gute Farbstabilität auch bei hoher Luftfeuchte (Tropenklima) und geringe Sensibilität auf Umwelteinflüsse (z.B. NOX, $SO_2$, usw.). Als negativ ist vor allem bei den Phenolharzen die relativ langsame Entwicklung der Kopien (speziell bei tiefen Temperaturen) und das starke Vergilben der Papiere unter Lichteinfluß zu betrachten.

Die sauer aktivierten Tone (smektitischen Schichtsilicate) sind aufgrund ihrer hohen spezifischen Oberflächen von etwa 300 $m^2$/g in der Lage, die Farbstoffe zu adsorbieren und in einer heterogene Katalyse zu entwickeln. Die Kapsellösemittel werden hierbei in den Poren des Tons absorbiert. Vorteilhaft bei sauren Tonen sind die schnelle Farbentwicklung, die gute Lichtstabilität und die geringe Vergilbungsneigung. Problematisch hingegen ist die Empfindlichkeit der Kopie gegen hohe Luftfeuchte und Umweltgase.

Neuerdings wurden am Markt Versuche beobachtet, die beiden Systeme Phenolharz und sauer aktivierter Ton zu kombinieren. Beide Verbindungen werden hierbei bei der Streichfarbenaufbereitung vereinigt und gemeinsam auf das Rohpapier aufgebracht. Die so gefertigten Papiere weisen allerdings weiterhin starke Vergilbungsneigung und erhebliche Empfindlichkeit gegen Luftfeuchte auf.

Es wurde nun gefunden, daß die oben genannten Probleme behoben und die Qualität der Farbentwicklerpigmente deutlich verbessert werden können, wenn ein Phenolharz auf der Oberfläche eines säureaktivierten smektitischen Schichtsilicats aufkondensiert wird.

Gegenstand der Erfindung ist somit ein Farbentwicklerpigment für Selbstdurchschreibepapiere auf der Basis von säureaktivierten smektitischen Schichtsilicaten, das dadurch gekennzeichnet ist, daß auf das säureaktivierte Schichtsilicat ein Phenolharz aufkondensiert ist.

Durch das erfindungsgemäße Farbentwicklerpigment werden die Eigenschaften der Systeme "Phenolharz" und "Säureton" vorteilhaft kombiniert. Das erfindungsgemäße Farbentwicklerpigment zeichnet sich durch gute rheologische Eigenschaften aus und ist absolut problemlos über die gängigen Streichaggregate verarbeitbar.

Vorzugsweise ist das säureaktivierte smektitische Schichtsilicat von einem smektitischen Schichtsilicat aus der Gruppe Bentonit, Beidellit, Nontronit, Saponit und/oder Hectorit abgeleitet.

Das säureaktivierte smektitische Schichtsilicat hat vorzugsweise eine spezifische Oberfläche von 120 bis 360 $m^2$/g und einen pH-Wert (in wäßriger Suspension) von 1 bis 5,5.

Die spezifische Oberfläche wird nach der im J. Am. Chem. Soc. 60 309 (1938) von S. Brunauer, P.H. Emmet und E. Teller beschriebenen sogenannten BET-Methode bei der Temperatur des flüssigen Stickstoffs bestimmt (Einpunktmethode nach DIN 66 131 und 66 132). Der pH-Wert in wäßriger Suspension (10 Gew.-%) wird mittels einer Glaselektrode nach DIN ISO 7879 ermittelt.

Das säureaktivierte smektitische Schichtsilicat hat im allgemeinen einen Gesamt-Eisenoxidgehalt von 0,5 bis 4,5 Gew.-%. Weiterhin hat es sich als vorteilhaft erwiesen, das säureaktivierte smektitische Schichtsilicat mit $Zn^{2+}$-Ionen zu dotieren.

Vorzugsweise ist auf das säureaktivierte Schichtsilicat ein Phenolharz aus einem in p-Stellung substituierten Phenol und Formaldehyd aufkondensiert. Der Substituent in p-Stellung ist vorzugsweise eine niedere Alkylgruppe, vorzugsweise eine tert. -Butylgruppe, eine Nonylgruppe, eine niedere Alkoxyoder Oxyalkylgruppe oder eine Phenylgruppe. Es können aber auch andere, zur Herstellung von Phenolharzen für Selbstdurchschreibepapiere übliche Phenolderivate verwendet werden.

Gegenstand der Erfindung ist ferner ein Verfahren zur Herstellung des vorstehend definierten Farbentwicklerpigments, das dadurch gekennzeichnet ist, daß man einer Suspension des säureaktivierten smektitischen Schichtsilicats eine Lösung oder Emulsion mindestens eines Phenols, vorzugsweise eines in p-Stellung substituierten Phenols, zusetzt, durch Zusatz von Formaldehyd die Polykondensation zu dem Phenolharz durchführt und das mit dem Phenolharz überzogene Schichtsilicat abtrennt.

Vorzugsweise führt man die Kondensation vom Phenolharz in einem wäßrigen Medium durch Temperaturerhöhung auf 50 bis 80°C als eine säurekatalysierte Reaktion durch, wobei das säureaktivierte Schichtsilicat selbst als Katalysator dienen kann. Die Reaktion kann aber auch durch Absenken des pH-Wertes auf etwa 2 durch Zusatz von Säure, wie wäßriger Salzsäure, vorgenommen werden.

Das mit dem Phenolharz überzogene Schichtsilicat wird vorzugsweise durch Filtration (insbesondere Vakuumfiltration) abgetrennt, und der Filterkuchen wird mit Wasser gewaschen, um überschüssige Säure und eventuell nicht umgesetzten Formaldehyd zu entfernen. Dann wird der Filterkuchen getrocknet und gegebenenfalls durch Naßvermahlung auf die gewünschte Teilchengröße eingestellt.

Gegenstand der Erfindung ist ferner eine wäßrige Streichfarbe, enthaltend das vorstehend beschriebene Farbentwicklerpigment und gegebenenfalls Extenderpigment in einer Konzentration von 30 bis 50 Gew.-%, vorzugsweise von 38 bis 48 Gew.-%, sowie ein übliches Bindemittel.

Gegenstand der Erfindung ist schließlich ein Durchschreibepapier, das mit dem vorstehend beschriebenen Farbentwicklerpigment bzw. der entsprechenden Streichfarbe beschichtet ist. Das Auftragsgewicht der Farbentwicklerformulierung (erfindungsgemäßes Farbentwicklerpigment, ggf. Extenderpigment und Bindemittel) beträgt vorzugsweise 2 bis 8 g/m$^2$, insbesondere etwa 4 bis 6 g/m$^2$. Das Papier liegt vorzugsweise in Form eines mit dem Farbentwicklerpigment gestrichenen CF-Blattes vor.

Die Erfindung ist durch die nachstehenden Beispiele in nicht einschränkender Weise erläutert.

Beispiel 1

Folgende Reaktionspartner wurden verwendet:

a) sauer aktivierter Bentonit (Copisil® ) mit folgenden Eigenschaften:

| | |
|---|---|
| spez. Oberfläche (BET) | 310 m$^2$/g |
| Weißgrad R457* | 86 % |
| Fe$_2$O$_3$-Gehalt | 1.4 Gew.-% |
| pH-Wert | 3.0 |

* Der Weißgrad wird durch Messung des Reflexionsfaktors R457 nach DIN 53 145 am Elrepho® 2000 der (Fa. Datacolor) gegen BaSO$_4$ als Weißstandard bestimmt.

b) p-tert.-Butylphenol, Schmelzpunkt 100 - 101°C;

c) Formaldehydlösung in Wasser, 30 %-ig.

Allgemeine Arbeitsweise:

Der sauer aktivierte Bentonit (SAB) wurde 10 Gew.-%-ig in Wasser dispergiert, und der pH-Wert wurde durch Zusatz geringer Mengen halbkonzentrierter Salzsäure auf 2.5 eingestellt. Zu dieser gut gerührten Suspension wurde eine etwa 90°C heiße 5 Gew.-%-ige wäßrige Lösung von p-tert. Butylphenol schnell zugesetzt, und die Mischung wurde 10 min homogenisiert. Die Temperatur der Suspension wurde auf 70 - 75°C erhöht und anschließend die 4-fache Molmenge (bezogen auf eingesetztes Phenol) an Formaldehyd (30 %-ig) langsam zugetropft. Nach einer Reaktionszeit von 90 min bei 75°C wurde heiß über ein Vakuum filtriert, und der Filterkuchen wurde mit Frischwasser säurefrei gewaschen. Der etwa 35 Gew.-%-ige Filterkuchen wurde nach Zusatz geringer Mengen an Frischwasser redispergiert und in einer Fryma-Kugelmühle auf eine Körnung < 15 μm und einen mittleren Korndurchmesser von dk = 2.5 μm vermahlen. Zur Körnungsanalyse wurde der Sedigraph® 5000 C verwendet, wobei die Aufbereitung der Probe (6 bis 7 g) durch 15-minütiges Erhitzen unter Rückfluß in 90 ml einer 0,002 molaren Na$_4$P$_2$O$_7$ x 10H$_2$O-Lösung erfolgte. Aufgezeichnet wurde der Rückstand bei 10 μm (R 10 μm) und der dk-Wert, d.h. der mittlere Korndurchmesser.

Die so erhaltene Suspension des erfindungsgemäßen Farbentwicklerpigmentes wurde im Verhältnis 25/75 otro/otro mit Calciumcarbonat (Hydrocarb 40® ) versetzt, und der Gesamtfeststoffgehalt der Pigmentsuspension wurde mit Wasser auf 45 Gew.-% eingestellt. Durch Zusatz von 10 Gewichtsteilen (otro) Styrol-Butadien-Latex (DL 950) unter leichtem Rühren wurde die CF-Streichfarbe komplettiert. Die Farbe wurde mit einem Handrakel auf ein holzfreies

Streichrohpapier (50 g/m$^2$) bei 4-5 g/m$^2$ Auftragsgewicht gecoatet, das Blatt getrocknet und leicht kalandriert. Nach Äquilibrierung bei 50 % rel. Luftfeuchte wurde die Durchschreibeleistung untersucht.

Untersuchungsmethoden

Geschwindigkeit der Farbentwicklung. Auf den bei 50 % rel. Feuchte äquilibrierten CF-Blättern wurde mit einem auf dem Markt erhältlichen Erstblatt (CB, blauschreibend) mittels eines Nadeldruckers eine Kopie erzeugt (Buchstabenraster "M", 5 x 5 cm). Die Geschwindigkeit der Entstehung der blauen Durchschrift wurde über 2 min. visuell verfolgt und beurteilt.

Eine differenzierende Einteilung erfolgte anhand eines sehr schnell entwickelnden Säureton-CF als Maßstab:

++    = sehr schnell
+    = akzeptabel
-    = langsam.

Kontrast 24 h. Die oben entwickelte Kopie wurde unter Lichtausschluß 24 h bei 50 % rel. Feuchte aufbewahrt und der Kontrast an einem Elrepho-Gerät (Fa. Datacolor, Ry-Filter) ermittelt:

$$\text{Kontrast} = \text{Ry/CF} - \text{Ry/Kopie} \ [\%].$$

Je höher dieser Wert ausfällt, desto intensiver ist die Kopie.

Stabilität gegen Luftfeuchte. Die wie oben entwickelte Kopie wurde 7 Tage einem "Tropenklima" ausgesetzt (70 °C/70 % rel. Luftfeuchte). Nach Entnahme aus dem Klimaschrank wurde sofort der Kontrast wie oben bestimmt. Kontrastverluste bezeugen eine Sensibilität der Kopie gegen Luftfeuchte.

Vergilbungsneigung. Ein unbeschriebenes CF-Blatt wurde in einem Suntester (Heraeus, Suntest CPS) 2 h einem energiereichen Sonnenlichtspektrum ausgesetzt (Xenonlampe). Die Strichweiße des CF-Blattes (Elrepho, R457) wurde vor und nach der Bestrahlung gemessen.

$$\text{Vergilbung} = \text{R457 (unbestrahlt)} - \text{R457 (bestrahlt)} \ [\%]$$

Je kleiner dieser Wert ausfällt, desto geringer ist die Vergilbungsneigung. Die verwendeten Säureton/t-Butylphenol-Verhältnisse in Beispiel 1 betrugen:

| Versuch | SAB | p-tert.-Butylphenol |
|---------|-----|---------------------|
| 1a | 95 | 5 |
| 1b | 90 | 10 |
| 1c | 75 | 25 |
| 1d | 50 | 50 |
| 1e | 25 | 75 |
| 1f | 5 | 95 |

Die Tabelle faßt die Ergebnisse der Versuche zusammen.

Beispiel 2

Beispiel 2 wurde analog zu Beispiel 1, Versuch 1c, durchgeführt, nur daß anstelle des p-tert.-Butylphenols ein p-Phenylphenol (Schmelzpunkt 165 - 168 °C) verwendet wurde.

Beispiel 3

Beispiel 3 wurde analog zu Beispiel 1, Versuch 1c durchgeführt, nur daß der SAB vorher mit Zn$^{2+}$-Ionen dotiert wurde. Hierzu wurde der SAB 10 % in dest. Wasser dispergiert und langsam eine Lösung von ZnCl$_2$ in dest. Wasser (10 Gew.-% ZnCl$_2$ auf SAB entspricht 4.8 Gew.-% Zn$^{2+}$ auf Ton) zugetropft. Es wurde 4 h bei Raumtemperatur gerührt und anschließend unter leichtem Vakuum abfiltriert. Der Filterkuchen wurde zur Umsetzung mit Phenol verwendet.

Eine Analyse ergab, daß 2.8 Gew.-% $Zn^{2+}$ auf dem SAB adsorbiert wurden.

Beispiel 4 (Vergleich)

Ein am Markt erhältliches Phenolharz zum Einsatz bei Selbstdurchschreibepapieren (HRJ 4023, Schenactady) wurde in eine zum Beispiel 1 analoge Streichfarbenrezeptur eingearbeitet: 25 Gew.-Teile Phenolharz/75 Gew.-Teile Hydrocarb 40® /10 Gew.-Teile Latex, Feststoff 45 Gew.-%. Die Farbe wurde analog auf das Rohpapier gerakelt.

Beispiel 5 (Vergleich)

Der in den Beispielen 1-3 verwendete SAB (Copisil® , Süd-Chemie AG) wurde zum Vergleich in einer Standardformulierung gestrichen:

| Copisil® | 75 Tle |
| Hydrocarb 40® | 25 Tle |
| Latex | 20 Tle |
| Feststoff | 45 %. |

Beispiel 6 (Vergleich)

Nach diesem Beispiel wurden 18,75 Gew.-Teile des in den vorherigen Beispielen verwendeten Copisil® in der Streichfarbe mit 6,25 Gew.-Teilen des Phenolharzes HRJ 4023 verschnitten und nach Zusatz von 75 Gew.-Teilen Hydrocarb 40® und 10 Gew.-Teilen Latex auf das Rohpapier gestrichen.

Dieses Beispiel entspricht in den Mengenverhältnissen dem Versuch 1c von Beispiel 1, arbeitet jedoch mit einer einfachen Mischung - ohne die erfindungsgemäße in-situ-Kondensation.

Die Tabelle zeigt, daß die Rezepturen nach den erfindungsgemäßen Beispielen 1, 2 und 3 der Phenolharzrezeptur nach Beispiel 4 und auch der mechanischen Mischung nach Beispiel 6 überlegen sind. Im Vergleich zur SAB-Rezeptur nach Beispiel 5 wurde eine bessere Stabilität gegen hohe Luftfeuchte erzielt.

| Beispiel | Strichgewicht g/m² | Entwicklungsgeschwindigkeit | Kontrast 24 h % | Kontrast n. Tropenklima % | Vergilbungsneigung % |
|---|---|---|---|---|---|
| 1a | 4.6 | ++ | 40.1 | 41.0 | 3.3 |
| 1b | 4.2 | ++ | 39.9 | 41.6 | 4.3 |
| 1c | 4.2 | ++ | 40.9 | 42.6 | 4.2 |
| 1d | 5.0 | + | 39.8 | 42.0 | 4.9 |
| 1e | 4.8 | + | 39.5 | 41.2 | 5.0 |
| 1f | 4.2 | + | 39.3 | 41.6 | 5.0 |
| 2 | 4.5 | + | 39.8 | 41.0 | 4.0 |
| 3 | 4.7 | ++ | 40.8 | 41.5 | 4.3 |
| 4 | 4.6 | - | 38.5 | 40.2 | 8.2 |
| 5 | 4.8 | ++ | 40.7 | 37.5 | 2.5 |
| 6 | 4.6 | ++ | 40.5 | 36.3 | 6.2 |

**Patentansprüche**

1. Farbentwicklerpigment für Selbstdurchschreibepapiere auf der Basis von säureaktivierten smektitischen Schichtsilicaten, **dadurch gekennzeichnet, daß** auf das säureaktivierte Schichtsilicat ein Phenolharz aufkondensiert ist.

2. Farbentwicklerpigment nach Anspruch 1, **dadurch gekennzeichnet, daß** das säureaktivierte smektitische Schichtsilicat von einem Schichtsilicat aus der Gruppe Bentonit, Beidellit, Nontronit, Saponit und/oder Hectorit abgeleitet ist.

3. Farbentwicklerpigment nach Anspruch 1 oder 2, **dadurch gekennzeichnet, daß** das säureaktivierte smektitische Schichtsilicat eine spezifische Oberfläche bestimmt nach BET-Methode (Einpunktmethode nach DIN 66131 und 66132) von 120 bis 360 m$^2$/g und einen pH-Wert in wäßriger 10 Gew.% Suspension von 1 bis 5,5 hat bestimmt nach DIN ISO 7879.

4. Farbentwicklerpigment nach einem der Ansprüche 1 bis 3, **dadurch gekennzeichnet, daß** das säureaktivierte smektitische Schichtsilicat mit Zn$^{2+}$-Ionen dotiert ist.

5. Farbentwicklerpigment nach einem der Ansprüche 1 bis 4, **dadurch gekennzeichnet, daß** auf das säureaktivierte smektitische Schichtsilicat ein Phenolharz aus einem in p-Stellung substituierten Phenol und Formaldehyd aufkondensiert ist.

6. Farbentwicklerpigment nach Anspruch 5, **dadurch gekennzeichnet, daß** der Substituent in p-Stellung eine niedere Alkylgruppe, vorzugsweise eine tert.-Butylgruppe, eine Nonylgruppe, eine niedere Alkoxy- oder Oxyalkylgruppe oder eine Phenylgruppe darstellt.

7. Verfahren zur Herstellung des Farbentwicklerpigments nach einem der Ansprüche 1 bis 6, **dadurch gekennzeichnet, daß** man einer Suspension des säureaktivierten smektitischen Schichtsilicats eine Lösung oder Emulsion mindestens eines Phenols, vorzugsweise eines in p-Stellung substituierten Phenols, zusetzt, durch Zusatz von Formaldehyd die Polykondensation zu dem Phenolharz durchführt und das mit dem Phenolharz überzogene Schichtsilicat abtrennt.

8. Verfahren nach Anspruch 7, **dadurch gekennzeichnet, daß** man die Kondensation zum Phenolharz in einem wässerigen Medium durch Temperaturerhöhung auf 50 bis 80°C als säurekatalysierte Reaktion, gegebenenfalls durch Absenkung des pH-Wertes durchführt.

9. Verfahren nach Anspruch 7 oder 8, **dadurch gekennzeichnet, daß** man das mit dem Phenolharz überzogene Schichtsilicat durch Filtration abtrennt, den Filterkuchen wäscht und trocknet und gegebenenfalls durch Naßvermahlung auf die gewünschte Teilchengröße einstellt.

10. Wäßrige Streichfarbe, enthaltend das Farbentwicklerpigment nach einem der Ansprüche 1 bis 6 und gegebenenfalls Extenderpigment in einer Konzentration von 30 bis 50 Gew.-%, vorzugsweise von 38 bis 48 Gew.-%, sowie ein übliches Bindemittel.

11. Durchschreibepapier, **dadurch gekennzeichnet, daß** es mit einem Farbentwicklerpigment nach einem der Ansprüche 1 bis 6 bzw. mit einer Streichfarbe nach Anspruch 10 beschichtet ist.

12. Papier nach Anspruch 11, **dadurch gekennzeichnet, daß** das Auftragsgewicht der Farbentwicklerformulierung 2 bis 8 g/m$^2$ beträgt.

13. Papier nach Anspruch 11 oder 12 in Form eines mit dem Farbentwicklerpigment gestrichenen CF-Blattes.

**Claims**

1. Colour developer pigment for carbonless copying papers based on acid-activated smectitic layered silicates, **characterised in that** a phenolic resin is condensed on the acid-activated layered silicate.

2. Colour developer pigment according to claim 1, **characterised in that** the acid-activated smectitic layered silicate is derived from a layered silicate from the group comprising bentonite, beidellite, nontronite, saponite and/or hectorite.

3. Colour developer pigment according to claim 1 or 2, **characterised in that** the acid-activated smectitic layered silicate has a specific surface area, determined in accordance with BET method (one-point method according to DIN 66131 and 66132), of 120 to 360 m$^2$/g and a pH value in 10 wt.% aqueous suspension of 1 to 5.5 determined according to DIN ISO 7879.

**4.** Colour developer pigment according to any one of claims 1 to 3, **characterised in that** the acid-activated smectitic layered silicate is doped with $Zn^{2+}$ ions.

**5.** Colour developer pigment according to any one of claims 1 to 4, **characterised in that** a phenolic resin from a phenol substituted in the p position, and formaldehyde are condensed on the acid-activated smectitic layered silicate.

**6.** Colour developer pigment according to claim 5, **characterised in that** the substituent in the p position is a lower alkyl group, preferably a tert-butyl group, a nonyl group, a lower alkoxy or oxyalkyl group or a phenyl group.

**7.** Process for producing the colour developer pigment according to any one of claims 1 to 6, **characterised in that** a solution or emulsion of at least one phenol, preferably a phenol substituted in the p position, is added to a suspension of the acid-activated smectitic layered silicate, polycondensation to the phenolic resin is carried out by adding formaldehyde and the layered silicate coated with the phenolic resin is separated.

**8.** Process according to claim 7, **characterised in that** the condensation to phenolic resin is carried out in an aqueous medium by raising the temperature to 50 to 80°C as an acid-catalysed reaction, optionally by reducing the pH value.

**9.** Process according to claim 7 or 8, **characterised in that** the layered silicate coated with the phenolic resin is separated by filtration, the filter cake is washed and dried and optionally adjusted to the desired particle size by wet grinding.

**10.** Aqueous coating compositions containing the colour developer pigment according to any one of claims 1 to 6 and optionally an extender pigment in a concentration of 30 to 50 wt.%, preferably of 38 to 48 wt.% and a conventional binder.

**11.** Copying paper, **characterised in that** it is coated with a colour developer pigment according to any one of claims 1 to 6 or with a coating composition according to claim 10.

**12.** Paper according to claim 11, **characterised in that** the coating weight of the colour developer formulation is 2 to 8 g/m$^2$.

**13.** Paper according to claim 11 or 12 in the form of a CF sheet coated with the colour developer pigment.

**Revendications**

**1.** Pigment révélateur chromogène pour papiers autocopiants à base de phyllosilicate smectitique activé par un acide, **caractérisé en ce qu'**une résine phénolique est appliquée par condensation sur le phyllosilicate activé par un acide.

**2.** Pigment révélateur chromogène selon la revendication 1, **caractérisé en ce que** le phyllosilicate smectitique activé par un acide dérive d'un phyllosilicate choisi dans le groupe comprenant la bentonite, la beidellite, la nontronite, la saponite et/ou l'hectorite.

**3.** Pigment révélateur chromogène selon la revendication 1 ou 2, **caractérisé en ce que** le phyllosilicate smectitique activé par un acide a une aire spécifique déterminée pour la méthode BET (méthode à un point selon DIN 66131 et 66132) de 120 à 360 m$^2$/g et un pH en solution aqueuse à 10 % en poids de 1 à 5,5 déterminé selon DIN ISO 7879.

**4.** Pigment révélateur chromogène selon l'une des revendications 1 à 3, **caractérisé en ce que** le phyllosilicate smectitique activé par un acide est dopé par des ions $Zn^{2+}$.

**5.** Pigment révélateur chromogène selon l'une des revendications 1 à 4, **caractérisé en ce qu'**une résine phénolique obtenue à partir d'un phénol substitué en position p et de formaldéhyde est appliquée par condensation sur le phyllosilicate smectitique activé par un acide.

**6.** Pigment révélateur chromogène selon la revendication 5, **caractérisé en ce que** le substituant en position p est un groupe alkyle inférieur, de préférence un groupe tert-butyle, un groupe nonyle, un groupe alcoxy ou oxyalkyle inférieur, ou un groupe phényle.

7.  Procédé de préparation du pigment révélateur chromogène selon l'une des revendications 1 à 6, **caractérisé en ce qu'**on ajoute à une suspension du phyllosilicate smectitique activé par un acide une solution ou une émulsion d'au moins un phénol, de préférence un phénol substitué en position p̲, que l'on met en oeuvre la polycondensation en la résine phénolique par addition de formaldéhyde, et **en ce qu'**on sépare le phyllosilicate revêtu de la résine phénolique.

8.  Procédé selon la revendication 7, **caractérisé en ce que**, comme réaction catalysée par un acide, on met en oeuvre la condensation conduisant à la résine phénolique dans un milieu aqueux par une élévation de la température à 50-80°C, éventuellement par abaissement du pH.

9.  Procédé selon la revendication 7 ou 8, **caractérisé en ce qu'**on sépare par filtration le phyllosilicate revêtu de la résine phénolique, on lave le gâteau de filtration et on le sèche, et éventuellement on ajuste sa granulométrie à la valeur souhaitée par broyage par voie humide.

10.  Peinture à l'eau pour enduction, contenant le pigment révélateur chromogène selon l'une des revendications 1 à 6, et éventuellement un pigment diluant à une concentration de 30 à 50 % en poids, de préférence de 38 à 48 % en poids, ainsi qu'un liant usuel.

11.  Papier autocopiant, **caractérisé en ce qu'**il est revêtu d'un pigment révélateur chromogène selon l'une des revendications 1 à 6 ou d'une peinture pour enduction selon la revendication 10.

12.  Papier selon la revendication 11, **caractérisé en ce que** la masse surfacique appliquée de la formulation de révélateur chromogène est de 2 à 8 g/m$^2$.

13.  Papier selon la revendication 11 ou 12, sous forme d'un feuillet CF revêtu d'un pigment révélateur chromogène.